# EUROPEAN PATENT SPECIFICATION

(11) **EP 1 096 599 B1**
(45) Date of publication and mention of the grant of the patent: **28.12.2005**
(21) Application number: 00123135.6
(22) Date of filing: 25.10.2000
(51) Int. Cl.: H01Q 1/24

(54) **Portable terminal device**
Tragbares Endgerät
Terminal portable

(30) Priority: 26.10.1999 JP 30459399
(43) Date of publication of application: 02.05.2001
(73) Proprietor: MATSUSHITA ELECTRIC INDUSTRIAL CO., LTD., Kadoma-shi, Osaka (JP)
(72) Inventor: Kitamura, Toshiyasu, Yokohama-shi, Kanagawa 245-0052 (JP); Hamada, Nobutoshi, Tokyo 142-0063 (JP); Furukawa, Katsuhisa, Kakegawa-shi, Shizuoka 436-0017 (JP)
(74) Representative: Grünecker, Kinkeldey, Stockmair & Schwanhäusser Anwaltssozietät

(56) References cited:
- EP-A- 0 942 487
- JP-A- 7 045 982
- US-A- 5 177 492
- US-A- 5 243 355
- US-A- 5 438 482
- US-A- 5 731 964
- PATENT ABSTRACTS OF JAPAN vol. 1996, no. 04, 30 April 1996 (1996-04-30) & JP 07 322339 A (KOKUSAI ELECTRIC CO LTD), 8 December 1995 (1995-12-08)

## Description

The present invention relates to a portable terminal device, according to the preamble of claim 1. Such a portable terminal device is already known from JP 07 322 339 A. Said document describes an antenna, an antenna tube and a gutter-like antenna tube storage part. The antenna tube storage part is provided in a battery storage part, which is provided in a rear case of the housing.

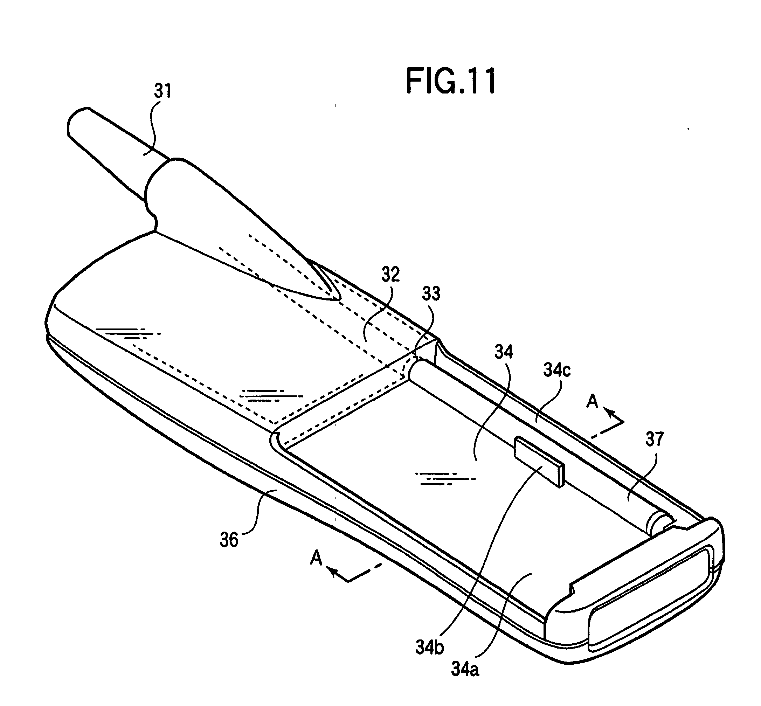

As shown in FIG. 11, in conventional portable terminal devices, an antenna tube 37 is placed on a flat part 34a of a battery storage part 34 through a hole 33 provided in a rear case 32 of a housing so as to be interposed and fixed between an engaging rib 34b provided on the flat part 34a of the battery storage part 34 and an inner wall 34c of the rear case.

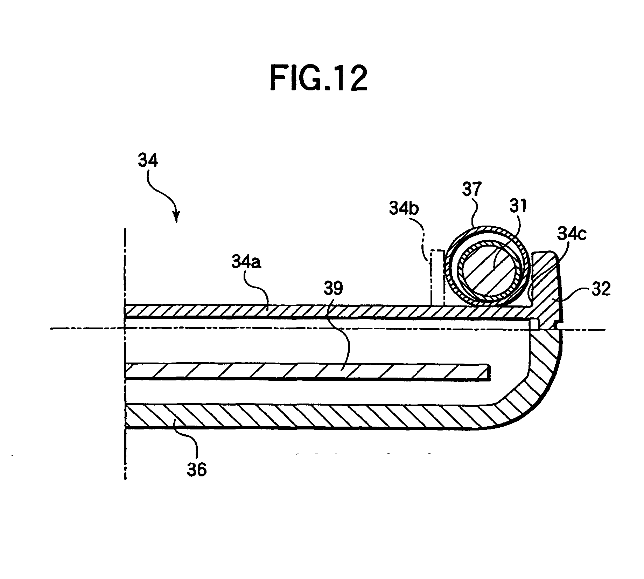

The state will be explained with reference to FIG. 12. The antenna tube 37 is stored in the rear case 32 of the housing, contacting with the side part of the battery storage part for storing a battery. A short engaging rib 34b is provided partially, projecting from the flat part 34a of the battery storage part 34a for positioning and fixing the antenna tube 37.

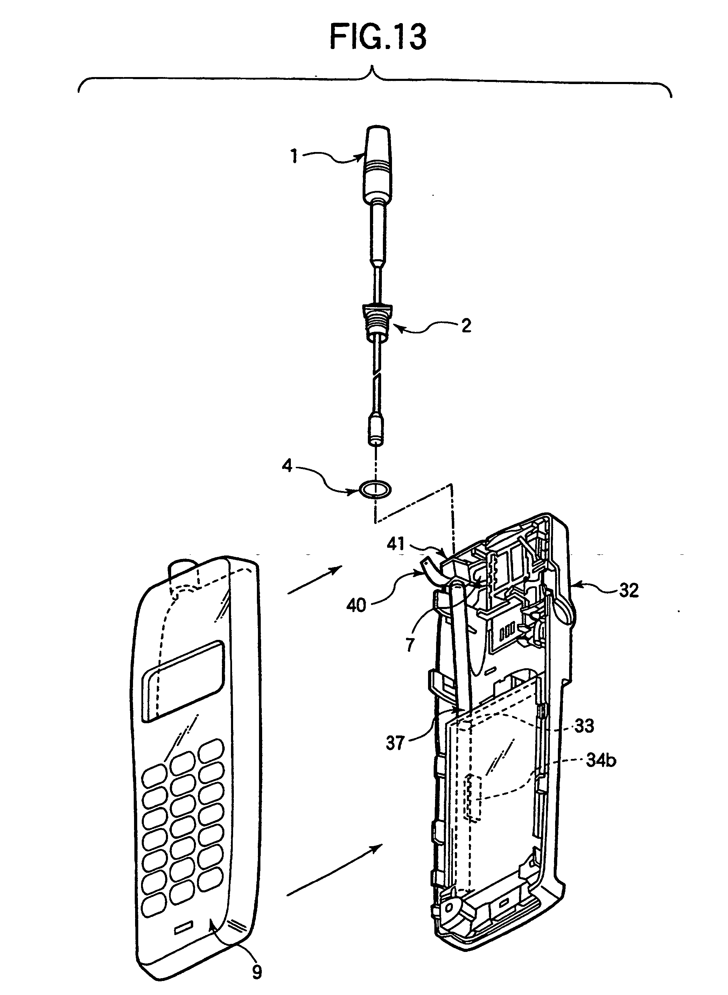

A conventional method for attaching and fixing an antenna will be explained with reference to an exploded perspective view of FIG. 13. Conventionally, in attaching and fixing an antenna, first, an antenna holder receiving tool 41 with the antenna tube 37 and an antenna terminal 40 coupled is prepared. After inserting the tip end of the antenna tube 37 through the hole 33 of the rear case 32, the antenna holder receiving tool 41 is pressured against the rear case 32 so as to be closely contacted and fixed. The tip end of the antenna tube 37 is interposed between the engaging rib 34b provided in the battery storage part and the inner wall 34c of the rear case so as to be fixed. Thereafter, an antenna main body 1 inserted through an antenna holder 2 is prepared. The tip end of the antenna main body 1 is inserted into the antenna tube 37 via the antenna inserting hole 7 of the rear case and the hole of the antenna receiving tool 41 so that the antenna holder is screwed and fixed into the antenna receiving tool 41.

Portable terminal devices such as portable phones and PHS (personal handy phone system) have been made smaller and lightweight year by year. These days, a thinner size has been a critical point to determine the merchandise value. However, a problem of weakness in terms of strength, such as decline of the rigidity of the device, arises in designing with a thinner shape while realizing a lighter weight of the device main body.

Moreover, since the antenna tube inserted through the hole provided in the rear case of the housing is placed on the flat part 34a of the battery storage part 34 so as to interpose the antenna tube 37 between the engaging rib 34b of the battery storage part and the inner wall 34c of the rear case in the above-mentioned conventional portable terminal device, a problem is involved in that the operativity and the assembly property are poor due to the operation of inserting the antenna tube from one surface of the rear case through the hole and gripping the same by the engaging rib 34b on the opposite side.

In order to solve the above-mentioned conventional problems, an object of the invention is to provide a portable terminal device capable of improving the assembly property of the device without the risk of deteriorating the rigidity while achieving a thinner shape of the device main body. The above and other objects of the invention are achieved by a portable terminal device according to claim 1. Preferred embodiments are claimed in the dependent claims.

A first aspect of the invention is a portable terminal device with an antenna main body to be stored in an antenna tube in a housing in the case an antenna is contracted, wherein a gutter-like antenna tube storage part is provided in a battery storage part integrally formed in a rear case of the housing so as to store the antenna main body in the antenna tube provided in the antenna tube storage part. A rib is provided along the antenna storage direction and extends from the antenna tube storage part.

According to the configuration, the section modulus of the rear case of the housing in terms of the strength of materials can be large, and thus deterioration of the rigidity can be prevented even in the case the device main body is made thinner.

In a preferred embodiment of the invention, a protrusion part of the gutter-like antenna tube storage part is formed on the battery side in the battery storage part so as to store the antenna tube in a recess part of the antenna tube storage part formed on the opposite side with respect to the battery side. According to the configuration, since the operation of inserting the antenna tube through the hole provided in the housing can be eliminated at the time of assembly, the assembly property of the device can be improved. Moreover, since the hole for inserting through the antenna tube provided commonly in the conventional housing is eliminated, entrance of sweat or water from the battery storage part into the housing inside through the hole can be avoided so as to prevent adverse effects on the electronic parts.

In a further preferred embodiment of the invention, an antenna tube is inserted through between the antenna tube storage part and a printed board. According to the configuration, deterioration of the rigidity can be prevented even in the case the device main body is made thinner as well as the assembly property of the device can be improved.

In a further preferred embodiment of the invention, the antenna tube storage part is a half cylindrical gutter-like antenna tube storage part. According to the configuration, a shape capable of improving the rigidity can easily be formed as well as since the outer circumferential surface of the antenna tube can fit with the half cylindrical surface of the antenna tube storage part, storage and assembly can be facilitated.
FIG. 1 is a perspective view showing the configuration of a portable phone device according to a first example;
FIG. 2 is a cross-sectional view of the portable phone device according to the first example;
FIG. 3 is a cross-sectional view of the portable phone device according to the first example;
FIG. 4 is a perspective view showing the configuration of a portable phone device according to a first embodiment of the invention;
FIG. 5 is a cross-sectional view of the portable phone device according to the first embodiment of the invention;
FIG. 6 is a perspective view showing the configuration of a portable phone device according to second example;
FIG. 7 is a cross-sectional view of the portable phone device according to the second example;
FIG. 8 is an exploded perspective view of the portable phone device according to the second example;
FIG. 9 is a perspective view showing the configuration of a portable phone device according to a second embodiment of the invention;
FIG. 10 is a cross-sectional view of the portable phone device according to the second embodiment of the invention;
FIG. 11 is a perspective view showing the configuration of a portable phone device according to a conventional embodiment;
FIG. 12 is a cross-sectional view of the conventional portable phone device; and
FIG. 13 is an exploded perspective view for explaining the assembly state of the conventional portable phone device.

### [First Example]

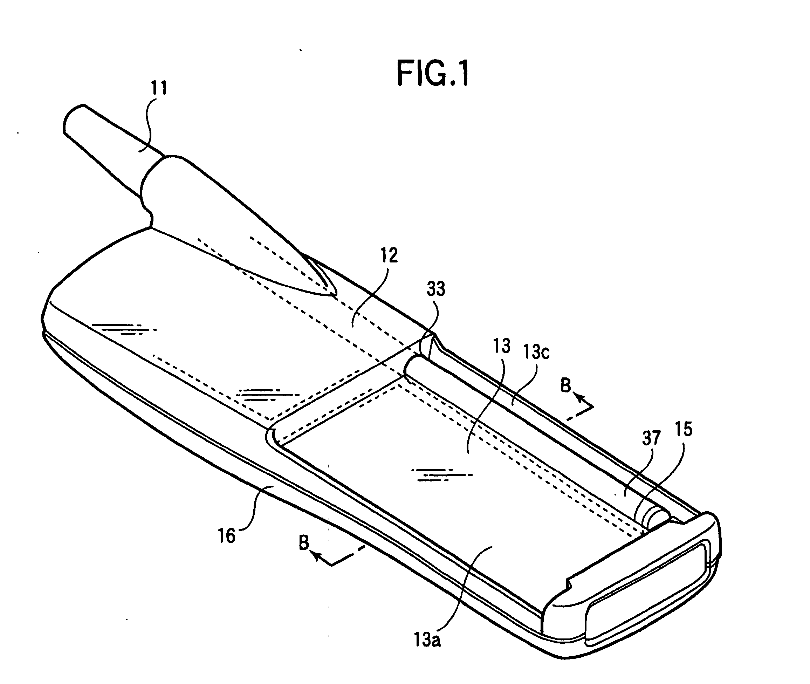

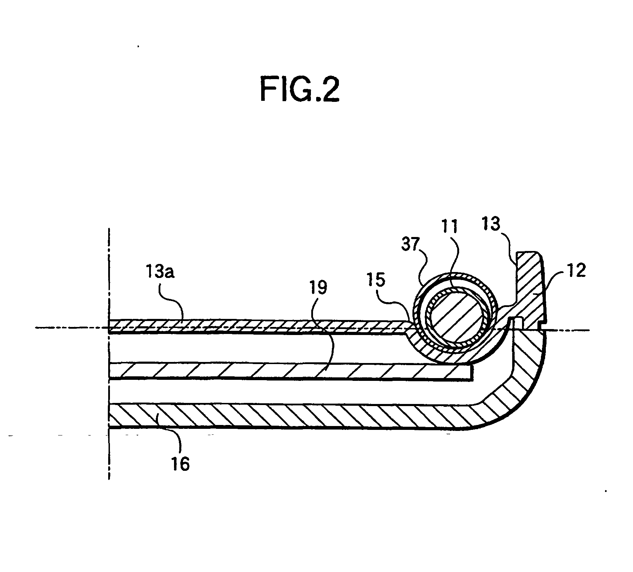

Hereinafter, a first example will be explained with reference to FIGS. 1 and 2. FIG. 1 is a perspective view showing the configuration of a portable terminal device according to an example, showing the portable terminal device with a battery detached, in the state with an antenna contracted so as to store an antenna main body 11 in a tube 37.

FIG. 2 is a partial cross-sectional view taken on the line B-B of FIG. 1 on the antenna tube side. A gutter-like antenna tube storage part 15 having a half cylindrical shape, is recessed downward from a flat part 13a of a battery storage part 13, integrally with a rear case 12 of a housing of the portable terminal device. Therefore, the section modulus of the rear case in terms of the strength of materials can be large, and thus deterioration of the rigidity can be prevented even in the case the device main body is made thinner.

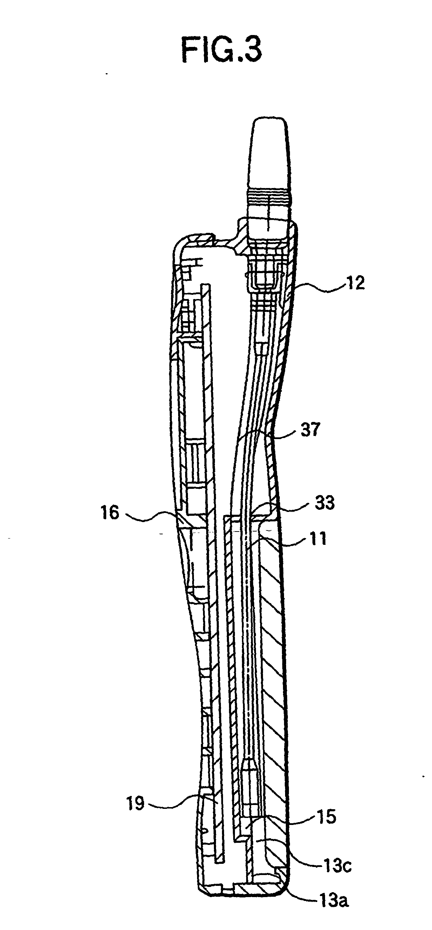

As shown in a cross-sectional view in the axial direction of the antenna according to the first example of FIG. 3, the axial direction of the antenna intersects obliquely with the flat part 13a of the battery storage part of the rear case 12. Accordingly, the antenna tube 37 is stored in the state pressured against the half cylindrical gutter-like antenna tube storage part 15. Therefore, unlike the conventional example, the engaging rib 34b can be eliminated so that the assembly operation of interposing the antenna tube 37 between the engaging rib 34b and the inner wall 34c of the rear case can be omitted, and thus the assembly property of the device can be improved.

### [First Embodiment]

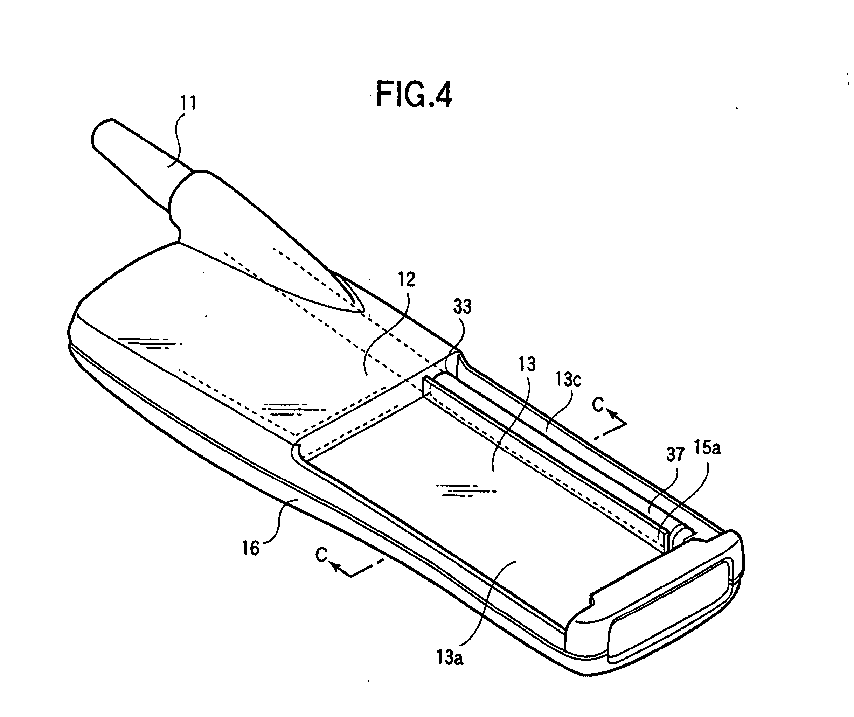

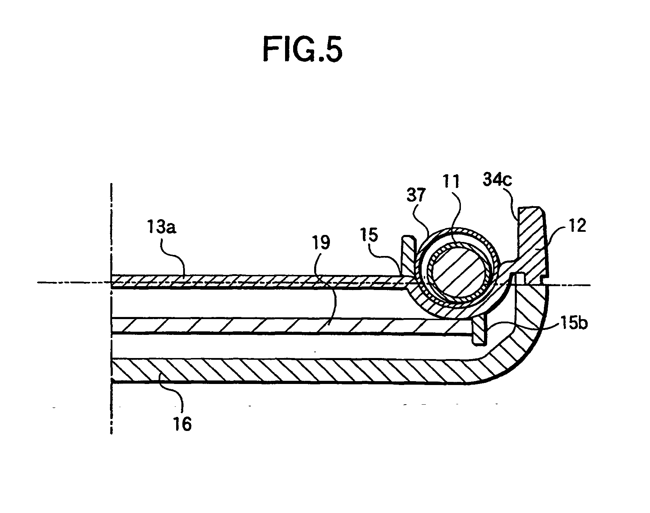

A first embodiment of the invention will be explained with reference to FIGS. 4 and 5. FIG. 4 is a perspective view showing the configuration of a portable terminal device according to the first embodiment of the invention, and FIG. 5 is a cross-sectional view taken on the line C-C of FIG. 4. It differs from the first example in that ribs 15a, 15b are formed additionally in the half cylindrical gutter-like antenna tube storage part 15 in the antenna storage direction. Accordingly, the rigidity of the device main body can further be improved as well as the antenna tube 37 can easily be stored in the antenna tube storage part 15 of the rear case and can hardly be detached from the antenna storage part 15 so as to improve the assembly property. The ribs 15a, 15b can be provided both or only one of them can be provided as well.

### [Second Example]

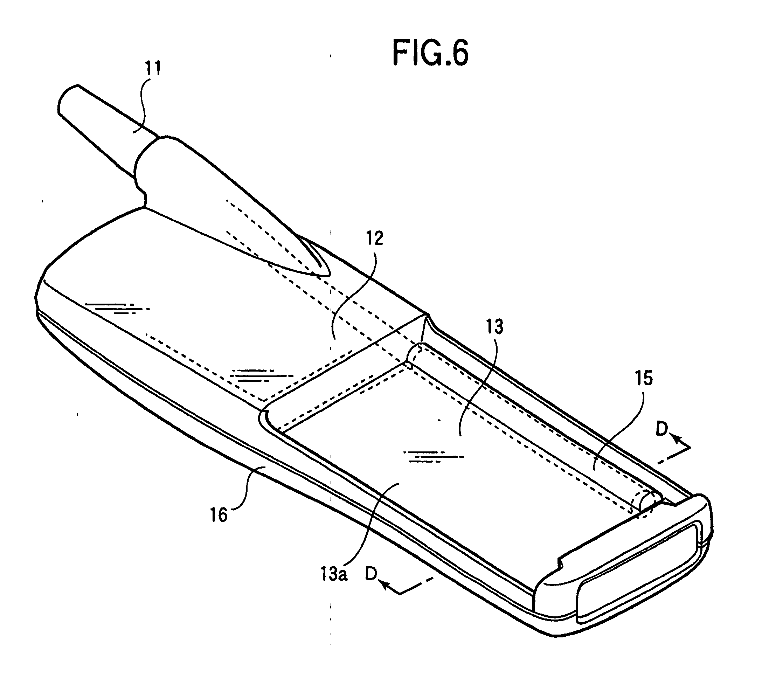

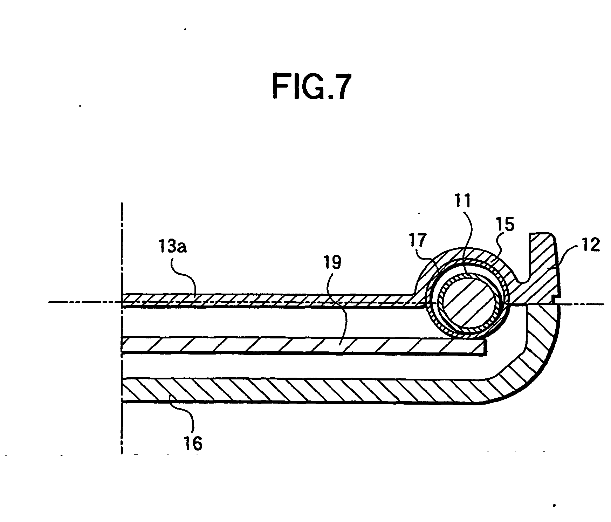

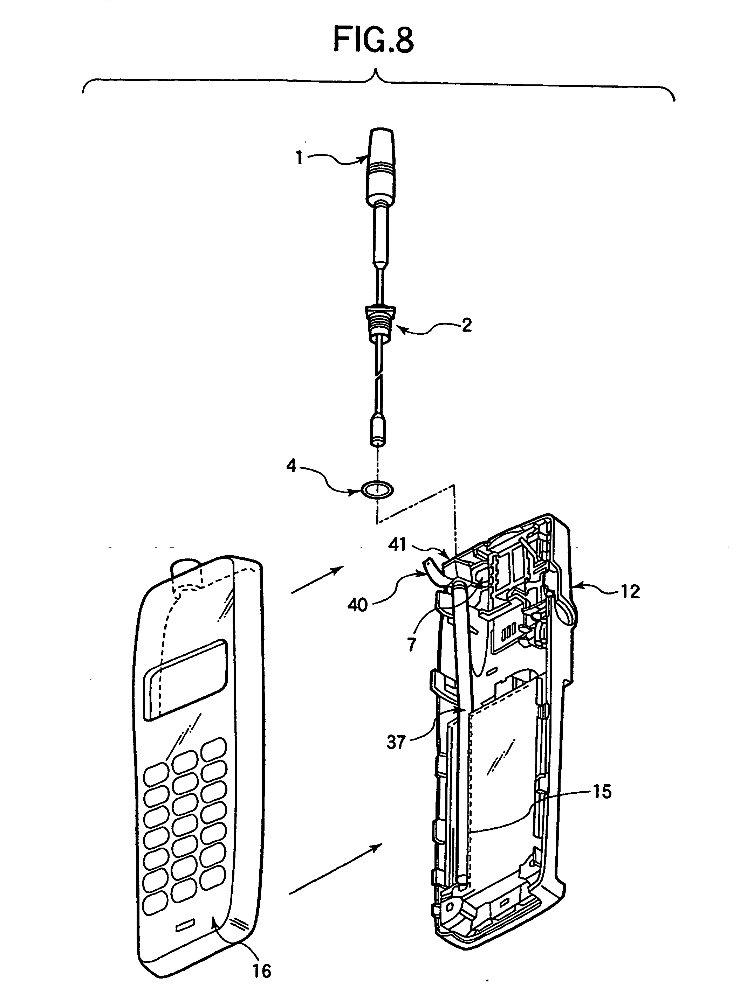

A second example of the invention will be explained with reference to FIGS. 6 and 7. FIG. 6 is a perspective view showing the configuration of a portable terminal device according to the second example, and FIG. 7 is a cross-sectional view taken on the line D-D of FIG. 6. It differs from the first example in that the recess part of the half cylindrical gutter-like antenna tube storage part 15 is formed on the battery side in the battery storage part, and the antenna tube 37 is stored in the recess part of the antenna tube storage part formed on the opposite side with respect to the battery side. As shown in an exploded perspective view of FIG. 8, since the antenna tube 37 can be stored on the same side as the antenna holder receiving part 41, unlike the conventional example, the antenna tube needs not be inserted through the hole of the rear case of the housing so that the assembly property can be improved. The antenna tube 37 is fixed finally by being pressured by a printed board 19 attached on a front case 16.

### [Second Embodiment]

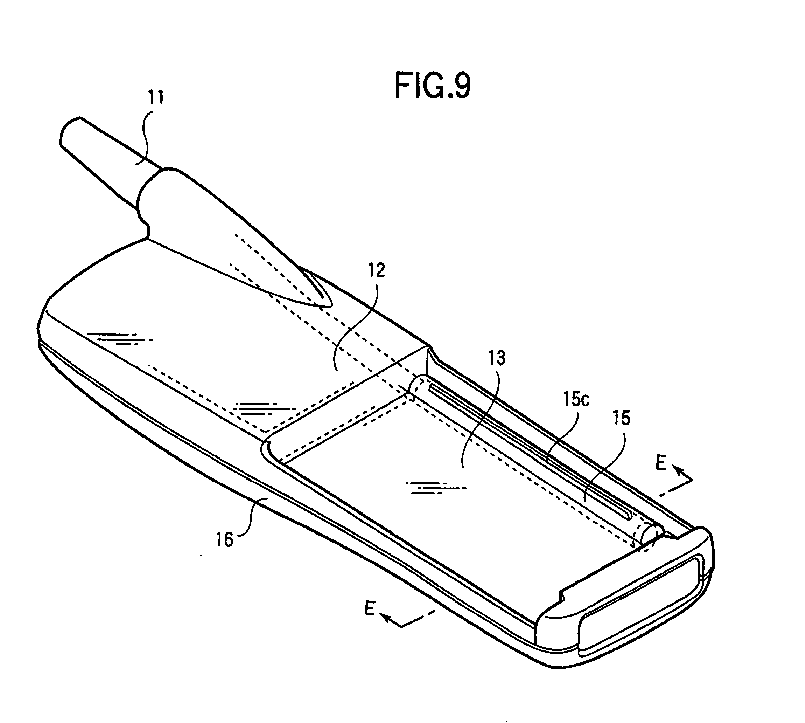

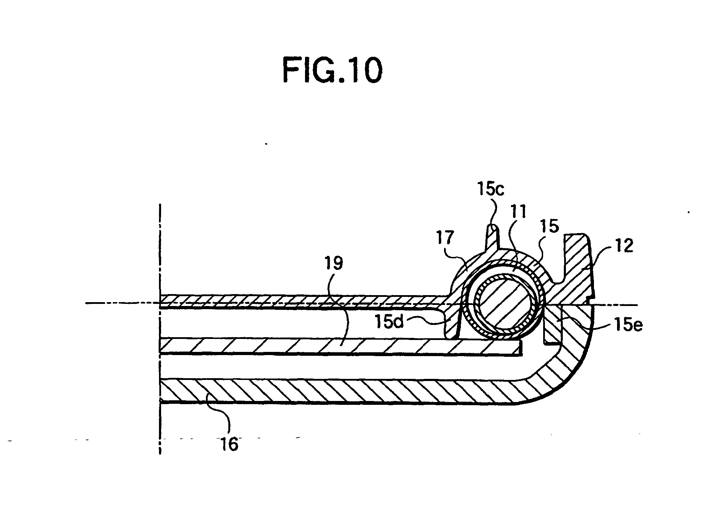

A second embodiment of the invention will be explained with reference to FIGS. 9 and 10. FIG. 9 is a perspective view showing the configuration of a portable terminal device according to the second embodiment of the invention, and FIG. 10 is a cross-sectional view taken on the line E-E of FIG. 9. It differs from the second example in that ribs 15c, 15d, 15e are formed additionally in the half cylindrical gutter-like antenna tube storage part 15 along the antenna storage direction. Accordingly, the rigidity of the device main body can further be improved. All the ribs 15c, 15d, 15e can be provided at the same time, or only one of them can be provided, or a combination thereof can be provided as well.

Although an example of a half cylindrical gutter-like antenna tube storage part has been explained as the antenna tube storage part 15 in the above-mentioned description, as a gutter-like antenna tube storage part, a V-shaped tub or a rectangular tub can be used as well. However, a half cylindrical shape is more preferable in terms of the shaping property.and the assembly property.

As mentioned above, since the first example is a portable terminal device with an antenna main body to be stored in an antenna tube in a housing in the case an antenna is contracted, wherein a gutter-like antenna tube storage part is provided in a battery storage part in a rear case of the housing so as to store the antenna main body in the antenna tube provided in the antenna tube storage part, the section modulus of the rear case of the housing in terms of the strength of materials can be large, and thus an effect of preventing deterioration of the rigidity can be achieved even in the case the device main body is made thinner.

Moreover, since the first aspect of the invention is the portable terminal device according to the first aspect, wherein a rib is provided along the antenna storage direction in the antenna tube storage part, the section modulus of the rear case of the housing in terms of the strength of materials can further be large, and thus an effect of preventing deterioration of the rigidity can be achieved even in the case the device main body is made thinner.

Furthermore, since the second example, is the portable terminal device according to the first example or first aspect, wherein a protrusion part of the gutter-like antenna tube storage part is formed on the battery side in the battery storage part so as to store the antenna tube in a recess part of the antenna tube storage part formed on the opposite side with respect to the battery side, the operation of inserting the antenna tube through the hole provided in the housing can be eliminated at the time of assembly, and thus the assembly property of the device can be improved. Moreover, since the hole for inserting through the antenna tube provided commonly in the conventional housing is eliminated, an effect of avoiding entrance of sweat or water from the battery storage part into the housing inside through the hole can be achieved so as to prevent adverse effects on the electronic parts.

Moreover, since the second aspect of the invention is the portable terminal device according to the second example, wherein the antenna tube is inserted through between the antenna tube storage part and a printed board, an effect of preventing deterioration of the rigidity even in the case the device main body is made thinner as well as an effect of improving the assembly property of the device can be achieved.

Furthermore, since the third aspect of the invention is the portable terminal device according to any of the first to second aspects, wherein the antenna tube storage part is a half cylindrical gutter-like antenna tube storage part, an effect of easily forming a shape capable of improving the rigidity as well as an effect of facilitating storage and assembly of the antenna tube in the antenna tube storage part can be achieved.

## Claims

1. A portable terminal device comprising:
an antenna; an antenna tube (37) for storing the antenna, the antenna tube (37) being provided in a housing, a gutter-like antenna tube storage part (15) provided in a battery storage part (13) and integrally formed with a rear case (12) of the housing to store the antenna in the antenna tube (37), **characterized in that** said portable terminal device further comprises at least one rib (15a,15b,15c,15d,15e) provided along the antenna storage direction and extending from the antenna tube storage part (15).

2. The portable terminal device according to claim 1, wherein a protrusion part of the gutter-like antenna tube storage part (15) is formed on the battery side in the battery storage part (13) so as to store the antenna tube (37) in a recess part of the antenna tube storage part (15) formed on the opposite side with respect to the battery side.

3. The portable terminal device according to claim 2, further comprising a printed board (19) provided under the battery storage part (13) and on the opposite side with respect to the battery side, wherein the antenna tube (37) is inserted through between the antenna tube storage part (15) and the printed board (19).

4. The portable terminal device according to claim 2, wherein the rib (15c) is provided on the protrusion part of the antenna tube storage part (15).

5. The portable terminal device according to claim 2 wherein the rib (15d) is provided on an end of the recess part in a direction of a printed board (19).

6. The portable terminal device according to one of the claims 1 to 5, wherein the antenna tube storage part is a half cylindrical gutter-like antenna tube storage part (15).

## Patentansprüche

1. Tragbare Endgerätvorrichtung, die umfasst:
eine Antenne; eine Antennenröhre (38) zum Aufbewahren der Antenne, wobei die Antennenröhre (37) in einem Gehäuse vorhanden ist, einen rinnenartigen Antennenröhren-Aufbewahrungsteil (15), der in einem Batterie-Aufbewahrungsteil (13) vorhanden und integral mit einer hinteren Verkleidung (12) des Gehäuses ausgebildet ist, um die Antenne in der Antenne nröhre (37) aufzubewahren, **dadurch gekennzeichnet, dass** die tragbare Endgerätvorrichtung des Weiteren wenigstens eine Rippe (15a, 15b, 15c, 15d, 15e) umfasst, die entlang der Antennenaufbewahrungs-Richtung vorhanden ist und sich von dem Antennenröhren-Aufbewahrungsteil (15) erstreckt.

2. Tragbare Endgerätvorrichtung nach Anspruch 1, wobei ein vorspringender Teil des rinnenartigen Antennenröhren-Aufbewahrungsteils (15) an der Batterie-Seite in dem Batterie-Aufbewahrungsteil (13) vorhanden ist, um die Antennenröhre (37) in einem ausgesparten Teil des Antennenröhren-Aufbewahrungsteils (15) aufzubewahren, der an der in Bezug auf die Batterie-Seite gegenüberliegenden Seite ausgebildet ist.

3. Tragbare Endgerätvorrichtung nach Anspruch 2, die des Weiteren eine Leiterplatte (19) umfasst, die unter dem Batterie-Aufbewahrungsteil (13) und an der in Bezug auf die Batterie-Seite gegenüberliegenden Seite vorhanden ist, wobei die Antennenröhre (37) zwischen dem Antennenröhren-Aufbewahrungsteil (15) und der Leiterplatte (19) hindurch eingeführt wird.

4. Tragbare Endgerätvorrichtung nach Anspruch 2, wobei die Rippe (15c) an dem vorspringenden Teil des Antennenröhren-Aufbewahrungsteils (15) vorhanden ist.

5. Tragbare Endgerätvorrichtung nach Anspruch 2, wobei die Rippe (15d) an einem Ende des ausgesparten Teils in einer Richtung einer Leiterplatte (19) vorhanden ist.

6. Tragbare Endgerätvorrichtung nach einem der Ansprüche 1 bis 5, wobei der Antennenröhren-Aufbewahrungsteil ein halbzylindrischer rinnenartiger Antennenröhren-Aufbewahrungsteil (15) ist.

## Revendications

1. Appareil terminal portable comprenant :
une antenne ; un tube d'antenne (37) pour stocker l'antenne, le tube d'antenne (37) étant prévu dans un carter, une partie de stockage de tube d'antenne semblable à une gouttière (15) étant prévue dans une partie de stockage de batterie (13) et étant intégralement formée avec un boîtier arrière (12) du carter pour stocker l'antenne dans le tube d'antenne (37), **caractérisé en ce que** ledit appareil terminal portable comprend, en outre, au moins une nervure (15a, 15b, 15c, 15d, 15e) prévue le long de la direction de stockage d'antenne et qui s'étend depuis la partie de stockage de tube d'antenne (15).

2. Appareil terminal portable selon la revendication 1, dans lequel une partie en saillie de la partie de stockage de tube d'antenne semblable à une gouttière (15) est formée du côté de la batterie dans la partie de stockage de batterie (13) de sorte à stocker le tube d'antenne (37) dans une partie de renfoncement de la partie de stockage de tube d'antenne (15) formée sur le côté opposé par rapport au côté batterie.

3. Appareil terminal portable selon la revendication 2, comprenant, en outre, une carte imprimée (19) prévue sous la partie de stockage de batterie (13) et du côté opposé par rapport au côté batterie, dans lequel le tube d'antenne (37) est inséré entre la partie de stockage de tube d'antenne (15) et la carte imprimée (19).

4. Appareil terminal portable selon la revendication 2, dans lequel la nervure (15c) est prévue sur la partie en saillie de la partie de stockage de tube d'antenne (15).

5. Appareil terminal portable selon la revendication 2, dans lequel la nervure (15d) est prévue sur une extrémité de la partie de renfoncement dans une direction d'une carte imprimée (19).

6. Appareil terminal portable selon l'une des revendications 1 à 5, dans lequel la partie de stockage de tube d'antenne est une partie de stockage de tube d'antenne semblable à une gouttière à moitié cylindrique (15).
